# EUROPEAN PATENT SPECIFICATION

(11) **EP 1 441 025 B1**
(45) Date of publication and mention of the grant of the patent: **08.03.2006**
(21) Application number: 03380095.4
(22) Date of filing: 15.04.2003
(51) Int. Cl.: C12L 11/00

(54) **Tool for moving casks**
Werkzeug zum Bewegen von Fässern
Outil pour remuage de barriques

(30) Priority: 22.01.2003 ES 200300145
(43) Date of publication of application: 28.07.2004
(73) Proprietor: Sagarte S.A., 31830 Lacunza, Navarra (ES)
(72) Inventor: Flores Flores, Sebastian, 31830 Lacunza (Navarra) (ES)
(74) Representative: Maldonado Jordan, Julia

(56) References cited:
- ES-A- 2 133 049
- FR-A- 2 228 001
- GB-A- 2 274 088
- US-A- 3 804 290
- US-A1- 2002 187 028

## Description

### OBJECT OF THE INVENTION

This invention refers to a tool, specially designed as an accessory for use in a wine cellar that makes and ages wine, whose purpose is to facilitate the typical and necessary operation of rotating the casks on their own axes, which must be performed periodically for different reasons, such as, for example, for cleaning, checking and emptying them, etc.

The object of the invention is to achieve a tool that allows this movement of the casks to be performed quickly and simply and with minimal effort by workers.

### BACKGROUND OF THE INVENTION

It is a known fact that, in the aforementioned wine cellars, the wine is stored in casks or barrels that rest on supports which can be stacked in order to achieve optimum use of available space in the wine cellar.

The aforementioned casks, although stable on their respective supports, are with relative frequency subjected to movements where they rotate on their own axes, for example, in the aforementioned tasks of cleaning, checking and emptying them, etc.

US 3804290 discloses a beer barrel having a pair of handles for the lifting thereof.

The applicant is the holder of European patent EP99500215 in which a support for casks is described that is equipped on its base platform with rollers or wheels on which the casks rest, designed to facilitate this rotation of the casks on their own axes.

Even if there are such wheels or rollers, moving the casks requires considerable physical effort on the part of the workers responsible for this task, which evidently must be substantially intensified when the supports lack these wheels and the casks must be rotated against the friction produced by their resting on the bars of the support.

### DESCRIPTION OF THE INVENTION

The tool that the invention proposes resolves the problem that was previously stated in a fully satisfactory manner, allowing the casks to be moved quickly and easily, whether they rest on wheels or whether they rest directly on the fixed structure of the support.

To do this, more specifically, the tool that the invention proposes is built through the functional combination of two elements that form a type of clamp designed to grasp the cask by its front end; one of these elements consists of a handle of considerable length, one of whose ends finishes in a transverse sleeve, and which also has near said end a lateral support parallel to this sleeve, while the second element is made up of an arm that is snugly fitted into the first element's sleeve, allowing longitudinal movement. This arm's free end has a curved support, opposite the lateral support on the first element, and at an appropriate distance from it, so that said curved support can act on the inner face of the cask's rim jutting out from the respective front base; the support's curve is appropriate to the curve of the cask, and its length is also appropriate to prevent the wood of the cask from being damaged by contact. The lateral support on the first element is designed to act on the outer face of the cask in this same area, and although it rests on a much smaller surface area, practically a point or a linear area, it does not mark or damage the cask either, as it acts on the typical outside metal band that holds the barrel's staves in this area.

### DESCRIPTION OF THE DRAWINGS

To complement this description and for the purpose of allowing for better understanding of the characteristics of the invention, in accordance with the example of its preferred embodiment, a set of drawings of an illustrative and non-restrictive nature, in which the following items are represented, is attached as an integral part of this description:
Figure 1. Shows, from a perspective view, a tool for moving casks embodied in accordance with the object of this invention.
Figure 2. Shows, also from a perspective view, an example of practical use of the tool shown in the previous figure, on a cask resting on its respective support.

### PREFERRED EMBODIMENT OF THE INVENTION

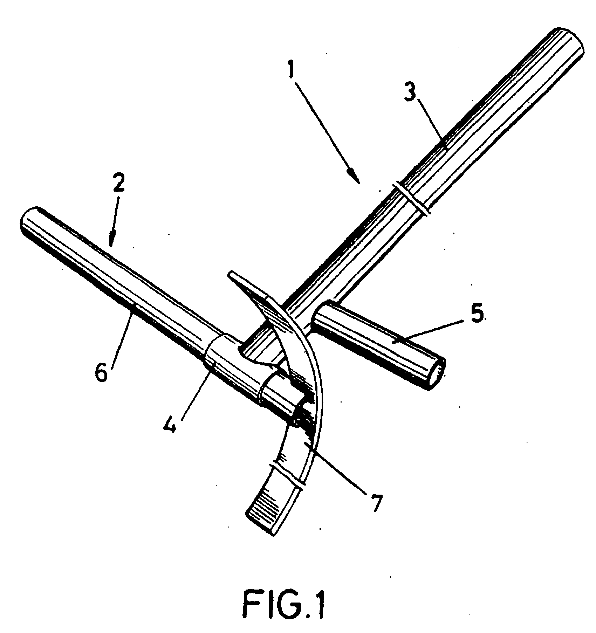

In looking at the figures described, and especially figure 1, it can be seen that the tool for moving casks that the invention proposes is made up of two elements (1) and (2), the first of which incorporates a handle (3) of considerable length, preferably consisting of a metal tube, which on one of its ends, by means of welding or any other appropriate method, receives a sleeve (4), which is also cylindrical, and whose axis is transverse to the axis of the handle (3), at the same time as, in the area near said sleeve (4) on said handle (3), there is also a lateral support (5) parallel to the sleeve (4), also made up of a cylindrical tube appropriately secured to the handle (3) by means of welding.

The second element (2), which is complementary to the previous one, consists, in turn, of a tubular and cylindrical arm (6) whose outer diameter is appropriate to the inner diameter of the sleeve (4), inside which it is intended to fit, as can be seen perfectly in figure 1, so that the arm (6) is parallel to the lateral support (5), and can move coaxially within the sleeve (4). On the end corresponding to the side where the lateral support (5) is located, the arm (6) has a brace (7) made up of a strip with a curving profile, whose convex surface faces the lateral support (5), although it is at a substantial distance from the latter, in order to allow the typical rim (8) defined on the bases (9) of the casks (10) to fit between these two elements, specifically, in this case, the rim (8) corresponding to the front base when the cask (10) is in position on its respective support (11).

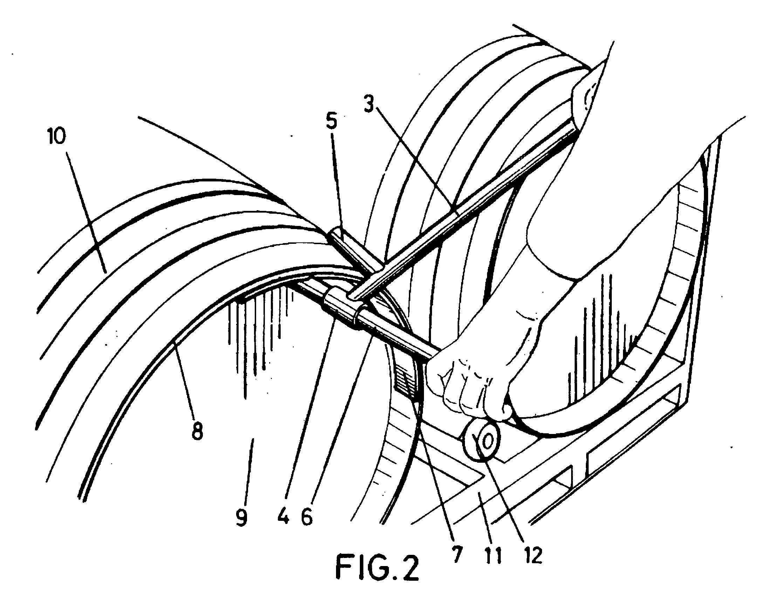

In the example of the practical embodiment represented in figure 2, the casks (10) appear on a support (11) equipped with wheels (12), which facilitate the rotation of said casks (10); however, both in this case and when the support has no wheels (12), the process of rotating the casks (10) is the same, i.e., the one shown in the aforementioned figure 2, using the handle (3) and the arm (6) as grasping points and performing a clamping action on the rim (8) of the cask with the tool's lateral support (5) and curved support (7) until tightened on said rim (8), after which a tilting movement on the handle (3) causes the cask (10) to rotate on its own axis.

The only fact that remains to be pointed out is that the arm's (6) ability to move axially inside of the sleeve (4) enables the curved brace (7) to adapt to different types or sizes of casks, whose rims (8) may be deeper or shallower, with the curved brace (7) in any case reaching the aforementioned bottom or base (9), always ensuring that the lateral support (5) is optimally seated on the outside of the cask, ensuring the optimum performance of the maneuver.

## Claims

1. Tool for moving casks, specifically for their rotation on their own axes when they are placed on supports, on which they rest with or without the presence of wheels between the support and the cask to facilitate said rotating movement, **characterized in that** it is constructed through the functional combination of two elements (1) and (2), which form a type of clamp that can be attached to the rim of the front base of the cask; one of the elements (1) of this device consists of a handle (3), of considerable length, one of whose ends finishes in a transverse sleeve (4), with a lateral support (5) parallel to said sleeve (4) being provided near that end, while the second element (2) is made up, in turn, of an arm (6) that moves axially inside of the first element's sleeve (4), with one of this arm's ends finishing in a curved brace (7).

2. Tool for moving casks, according to claim 1, **characterized in that** the handle (3) that forms part of the first element (1) is tubular, cylindrical and made of metal, the same as its sleeve (4) and its lateral support (5), which are secured to the handle preferably by means of welding, while the arm (6) of the second element (2) is also cylindrical, tubular and made of metal, with an outer diameter appropriate to the inner diameter of the sleeve (4) of the first element, with respect to which it can move, both in an axial and in an angular direction.

3. Tool for moving casks, according to the previous claims, **characterized in that** the curved brace (7) of the second element (2) is made up of a strip of considerable length, with a curving profile, whose convex side faces the lateral support (5) of the first element (1), and which is at more than sufficient distance from said lateral support (5) to allow the rim that circles the base of the cask (10) to fit between them.

## Patentansprüche

1. Werkzeug für das Bewegen von Fässern, insbesondere für deren Drehung über ihren eigenen Achsen, wenn sie auf Trägern aufliegen, mit oder ohne Rädern zwischen dem Träger und dem Fass, um die besagte Drehbewegung zu erleichtern, **dadurch gekennzeichnet, dass** dieses durch das Zusammenwirken der beiden Elemente (1) und (2) gebaut wird, die eine Art Zange bilden, die am Rand des vorderen Bodens des Fasses befestigt werden kann; eines dieser Elemente (1) dieser Vorrichtung besteht aus einem Griff (3) beträchtlicher Länge, dessen eines Ende in einer Querhülse (4) endet, mit einem seitlichen Halter (5), der parallel zu dieser Hülse (4) verläuft und nahe an deren Ende angeordnet ist, während das zweite Element (2) seinerseits aus einem Arm (6) besteht, der axial innerhalb der Hülse des ersten Elements beweglich ist, wobei eines der Enden dieses Arms in einer bogenförmigen Klammer endet.

2. Werkzeug für das Bewegen von Fässern nach Anspruch 1, **dadurch gekennzeichnet, dass** der Griff (3), der einen Teil des ersten Elements (1) bildet, röhrenförmig, zylindrisch ausgebildet ist und aus Metall besteht, genau wie seine Hülse (4) und sein seitlicher Halter (5), die vorzugsweise durch Verschweißen an dem Griff befestigt sind, während der Arm (6) des zweiten Elements (2) ebenfalls zylindrisch, röhrenförmig ausgebildet ist und aus Metall besteht, mit einem Außendurchmesser, der für den Innendurchmesser der Hülse (4) des ersten Elements geeignet ist, bezüglich der er beweglich ist, und zwar sowohl in die axiale Richtung als auch in eine abgewinkelte Richtung.

3. Werkzeug für das Bewegen von Fässern nach den vorhergehenden Ansprüchen, **dadurch gekennzeichnet, dass** die bogenförmige Klammer (7) des zweiten Elements (2) aus einem Band beträchtlicher Länge besteht, mit einem gebogenen Profil, dessen konvexe Seite zum seitlichen Halter (5) des ersten Elements (1) gewandt ist, und die in einem Abstand zu dem genannten seitlichen Halter (5) angeordnet ist, der mehr als ausreichend bemessen ist, um zu ermöglichen, dass der Rand, der den Boden des Fasses (10) umgibt, zwischen diesen einrastet.

## Revendications

1. Outil pour bouger des tonneaux, spécifiquement pour leur rotation sur leurs propres axes, lorsqu'ils sont mis en place sur des supports sur lesquels ils reposent avec ou sans la présence de roues entre le support et le tonneau pour faciliter ledit mouvement de rotation, **caractérisé en ce qu'**il est construit au moyen de la combinaison fonctionnelle de deux éléments (1) et (2), qui forment un type de pince pouvant être fixée au bord de la base frontale du tonneau; un des éléments (1) de ce dispositif consiste en une anse (3) de longueur considérable, une extrémité de laquelle termine en un manchon (4) transversal avec un support (5) latéral parallèle audit manchon (4) proportionné près de l'extrémité, tandis que le deuxième élément (2) est composé, à son tour, d'un bras (6) qui bouge axialement dans le manchon (4) du premier élément avec une des extrémités de ce bras terminé en un collier de serrage (7) courbé.

2. Outil pour bouger des tonneaux selon la revendication 1, **caractérisé en ce que** l'anse (3) faisant partie du premier élément (1) est tubulaire, cylindrique et faite en métal, tout comme son manchon (4) et son support (5) latéral, qui sont fixés à l'anse de préférence par soudure, tandis que le bras (6) du deuxième élément (2) est aussi cylindrique, tubulaire et fait en métal, avec un diamètre extérieur approprié pour le diamètre interne du manchon (4) du premier élément, par rapport auquel il peut bouger, aussi bien dans la direction axiale que dans la direction angulaire.

3. Outil pour bouger des tonneaux selon les revendications antérieures, **caractérisé en ce que** le collier de serrage (7) courbé du deuxième élément (2) est composé d'une bande de longueur considérable, avec un profil courbé, dont le côté convexe fait face au support (5) latéral du premier élément (1), et qui se trouve à une distance dudit support (5) latéral plus que suffisante pour permettre que le bord qui entoure la base du tonneau (10) s'emboîte entre eux.
